# EUROPEAN PATENT SPECIFICATION

(11) **EP 2 436 936 B1**
(45) Date of publication and mention of the grant of the patent: **28.11.2012**
(21) Application number: 10182381.3
(22) Date of filing: 29.09.2010
(51) Int. Cl.: F16B 31/02

(54) **Bolt preloading check system**
System zur Prüfung der Schraubenvorspannung
Système de vérification du préchargement d'un boulon

(43) Date of publication of application: 04.04.2012
(73) Proprietor: SIEMENS AKTIENGESELLSCHAFT, 80333 München (DE)
(72) Inventor: Laursen, Christian, 8722, Hedensted (DK); Stiesdal, Henrik, 5000, Odense C (DK)

(56) References cited:
- WO-A2-2006/055254
- US-A- 3 323 403
- US-A- 3 728 933
- US-A- 4 072 081

## Description

### Field of invention

The present invention relates to a bolt system for indicating a level of preload of a bolt that is connectable to a subject to be fixed. Moreover, the present invention relates to a method of indicating a level of preload of a bolt that is connectable to a subject to be fixed (US 3,323,403 A).

### Art Background

Typically, bolts are used to fix a subject, such as a plate, to a further subject. In order to fix the subject safely, a preload has to be exerted to the bolt and the subject. Over a time the preload of such a bolt system decreases such that the bolt joint system may be loosened. This occurs because the properties of the materials of the subject and the bolt are alternating e.g. due to varying temperatures, vibrations, compressions and/or elastic deformations etc..

In conventional bolt systems, spring washers are applied between a bolt head and the subject in order to ensure sufficient preload when a bolt is tightened to the subject. Spring washers are known in multiple outlays including single- and multiple coil spring washers. The state of the spring washers indicates the level of bolt preload. In particular, when the spring washer is freely movable with respect to the bolt, no preload is exerted to the bolt and the subject. When the spring washer is partly compressed, a substantially uniform level of preload is exerted to the bolt. When the spring washer is fully compressed the further tightening of the bolt will result in a proportional increase in preload on the bolt.

Moreover, the use of torque wrenches may be used in conventional systems in order to measure a bolt preload and to ensure that a correct preload is applied to the bolt. Furthermore, the use of micrometers is known in order to measure the deformation of the bolt due to the preload.

Furthermore, in conventional bolt systems so-called bolt extenders are used. Such a bolt system comprises a sleeve that is introduced between the bolt head and the subject to be fixed. When the bolt is tightened, preload is exerted to the bolt. The sleeve transfers the preload to the subjects that are fixed by the bolt. Thereby, the sleeve may be elastically deformed due to the exerted preload. The sleeve ensures that the preload is maintained, because the sleeve will absorb changes in the preload by its elasticity, even if the bolt or the subject changes its mechanical properties over time, e.g. due to varying temperatures, vibration, compression and/or deformation etc.. When the sleeve is movable insufficient preload is exerted to the bolt.

### Summary of the Invention

It may be an object of the present invention to provide a more detailed indicating system for indicating a level of preload of a bolt.

This object may be solved by a bolt system for indicating a level of preload of a bolt that is connectable to a subject to be fixed and by a method of indicating a level of preload of a bolt that is connectable to a subject to be fixed according to the independent claims.

According to a first aspect of the present invention a bolt system for indicating a level of preload of a bolt that is connectable to a subject to be fixed is provided. The bolt system comprises the bolt with a bolt head, a first sleeve and a second sleeve. The first sleeve is attached to the bolt between the bolt head and the subject. The second sleeve is attached to the bolt between the bolt head and the subject. The first sleeve is an inner sleeve and the second sleeve is an outer sleeve that fits around the first sleeve. One sleeve is longer than the other sleeve. When the preload is below a maximum value, the longer sleeve transmits the preload between the bolt head and the subject. When the preload is above the maximum value, the longer sleeve is compressed in such a way that both sleeves transmit the preload between the bolt head and the subject.

Thus, when the preload is above the maximum value and the preload is transmitted by both sleeves, both sleeves are clamped between the bolt head and the subject. When both sleeves are clamped between the bolt head and the subject, both sleeves are immovable with respect to each other, so that a preload transmission by the clamped sleeves indicates that the preload exceeds the maximum value.

For example, when the preload is above the maximum value, the longer sleeve is compressed in such a way that the lengths of the sleeves are equal. In particular, when the preload is above the maximum value, the lengths of both sleeves may still be different but both sleeves are in direct or indirect contact with the bolt head and the subject for transmitting the preload. An indirect contact may be enabled by interposing a flange or a washer between the subject and the respective sleeves.

According to a further aspect of the present invention a method of indicating a level of preload on a bolt that is connectable to a subject to be fixed is provided. According to the method, a first sleeve and a second sleeve is attached to the bolt between a bolt head and the subject, wherein the first sleeve is an inner sleeve and the second sleeve is an outer sleeve that fits around the first sleeve and wherein one sleeve is longer than the other sleeve. Furthermore, the preload between the bolt head and the subject is transmitted by the longer sleeve when the preload is below a maximum value. The longer sleeve is compressed when the preload is above the maximum value (e.g. in such a way that the lengths of both sleeves are equal) such that both sleeves transmit the preload between the bolt head and the subject.

The term "bolt head" denotes a section of the bolt that is integrally formed with the bolt, i.e. the bolt shaft. Additionally or alternatively the bolt head may be formed by a separate nut or washer, wherein the sleeves are attached between the nut and/or the washer and the subject to be fixed. The bolt may further comprise a winding on an opposite end section with respect to the bolt head. By the winding, the bolt may be screwed in a corresponding winding of the subject. Moreover, the bolt may be stuck through a hole of the subject, wherein a nut may be screwed in order to exert preload to the bolt system and the subject. Moreover, the bolt may be press-fit connected to a corresponding hole of the subject, so that by hammering the bolt in the hole the preload is exerted to the bolt system and the subject.

The length of the sleeves is defined with respect to the extension direction of the bolt, in particular the bolt shaft. In other words, the length of the sleeves is defined by a dimension of each sleeve along a centre axis of the bolt. For example, the longer sleeve comprises a larger length along the centre axis of the bolt than the other, shorter sleeve.

The subject may comprise one single item or a plurality of items that are fixed by the above-described bolt system.

By the above-described bolt system and by the above-described method, an indicator for indicating a level of preload of the bolt system and the subject is provided. In particular, the exerted preload is measurable by measuring the compression state of the longer sleeve of the bolt system. In particular, when the bolt is tightened to the subject, in a first state the first sleeve and the second sleeve are loose and are movable with respect to the bolt. This indicates that no preload is transmitted from the bolt to the subject. In a next state, when the preload comprises a value between a maximum and a minimum preload, the longer sleeve is clamped between the bolt head and the subject. This may be checked easily if the operator touches the longer sleeve and tries to move the longer sleeve. If the longer sleeve is immovable with respect to the bolt and the other, shorter sleeve is kept movable with respect to the longer sleeve and the bolt, it is indicated that the preload is between the maximum and the minimum value. Next, in a further state, the longer sleeve is compressed by the preload until both sleeves transmit the preload from the bolt head to the subject, so that both sleeves are immovable with respect to the bolt. This indicates that the preload exceeds a maximum value, so that the operator knows that the preload exerted on the bolt system is too high and the bolt should be loosened.

Hence, by the above-described invention, a simple but more accurate indicating system for a bolt connection is achieved. Complex and expensive sensor elements, for example, are not necessary. Moreover, it is not only possible to measure two states of the bolt system, in particular the states "no preload" and "preload", but it is additionally possible to indicate the state "preload exceeds the maximum value". Thus, mechanical systems that are exposed to rough environmental conditions, such as large temperature changes, corrosive environment etc., such as in wind turbines, the above-described bolt system comprises due to its simple construction a high level of reliability.

According to a further exemplary embodiment of the bolt system, the longer sleeve comprises elastic characteristics that are defined in such a way that the length of the first sleeve is definable when transmitting the maximum value of the preload. The elastic characteristics may be adjusted e.g. by the choice of material, the dimensions of the sleeves and by certain alloys. In other words, the length of the sleeve at the maximum value of the preload is a function of its elastic characteristics, such as the elastic modulus. For this reason, the bolt system may be adapted to a desired preload that should be transmitted from the bolt to the subject to be fixed.

Moreover, the sleeves may be designed exchangeable, so that one bolt system may be adapted to different conditions with respect to the desired maximum preload that should be exerted between the bolt and the subject.

According to a further exemplary embodiment, the first sleeve is the longer sleeve with respect to the second sleeve. By the exemplary described embodiment the first sleeve is attached to the bolt and the second sleeve, which is the shorter sleeve, is attached around the first sleeve. Thus, an operator may easily control the state of the preload simply by moving the first sleeve and the second sleeve. As described above, if the first sleeve and the second sleeve are loosened, the bolt transmits no preload to the subject. When only the second sleeve is movable and the first sleeve is fixed, the correct preload is exerted between the bolt and the subject. If both sleeves are immovable with respect to the bolt, the bolt is screwed too strong, so that too much preload is exerted and the preload exceeds the maximum value.

According to the invention, the second sleeve is slideably attached to the first sleeve. The second sleeve is slideably with respect to the first sleeve, if the first sleeve transmits the preload with a value below the maximum value. Moreover, the second sleeve is immovable with respect to the first sleeve, if the first sleeve and the second sleeve transmit the preload with a value above the maximum value.

According to a further exemplary embodiment, the first sleeve and the second sleeve are abuttable on the subject. With the present exemplary embodiment the preload is directly transmitted from the bolts to the subject by the sleeves, without interposing additional parts. Thus, a more lightweight and more inexpensive bolt system may be achieved.

According to a further exemplary embodiment, the first sleeve comprises a flange, wherein the flange is abuttable on the subject. The second sleeve is abuttable to the flange and the bolt head. The flange builds a seating for the second sleeve. Thus, when the second sleeve transmits the preload, the preload is transmitted indirectly from the second sleeve over the flange of the first sleeve to the subject. By this exemplary embodiment a gentler bolt system may be achieved, in particular if the second sleeve is designed from a material that is more rigid and harder than the material of the first sleeve. Moreover, by providing the flange with a larger seating area, the seating stress is reduced because the preload is transmitted to the subject over this larger flange area. In particular, the second sleeve may be formed very hard and incompressible in comparison to the first sleeve even under high preloads, so that by the above-described flange the seating stress is reduced with respect to the subject, so that the risk of damage of the subject is reduced.

According to a further exemplary embodiment, the bolt system further comprises a spring washer. The spring washer is attached to the first sleeve, wherein the spring washer is adapted for transferring a predetermined value of the preload to the second sleeve. By the spring washer the amount of preload that is transferred to the second sleeve may be determined more exactly. In particular, as long as the spring washer is not compressed maximally, the second sleeve is not clamped immovable with respect to the bolt.

According to a further exemplary embodiment the first sleeve comprises a groove to which the spring washer is attached. If the spring washer is attached to such a groove, the risk of slipping away of the spring washer may be reduced.

According to the invention, the bolt system further comprises an intermediate sleeve. The intermediate sleeve fits around the first sleeve and the second sleeve fits around the intermediate sleeve. When the preload is below an intermediate value the first sleeve is adapted for transmitting the preload between the bolt head and the subject and in particular the intermediate sleeve does not transmit the preload. When the preload is above the intermediate value, the first sleeve is compressed in such a way that, both, the first sleeve and the intermediate sleeve transmit the preload between the bolt head and the subject, so that a preload transmission by the intermediate sleeve indicates that the preload exceeds the intermediate value.

In particular, the first length of the first sleeve may be longer than an intermediate length of the intermediate sleeve. Then, if the preload exceeds the intermediate value, the first sleeve is compressed in such a way that the first length of the first sleeve is equal to the intermediate length of the intermediate sleeve.

By placing the intermediate sleeve between the first sleeve and the second sleeve, a more detailed indication system for a preload acting on the bolt system may be achieved. In particular, by a predetermined length and/or by a predefined material characteristic (such as the elasticity modulus) a predefined intermediate value may be set up at which the intermediate sleeve additionally transmits a part of the preload. Then, the intermediate sleeve is immovable with respect to the first sleeve and the immovability of the intermediate sleeve indicates the operator that a preload above the intermediate value is exerted and transmitted by the bolt system. In particular, the intermediate value defines a value of the preload between the state "no transmission of preload" and the state "maximum value of preload".

According to a further exemplary embodiment, the bolt system comprises a plurality of intermediate sleeves. By interposing a plurality of varying intermediate sleeves between the first sleeve and the second sleeve, a plurality of predefined intermediate values may be indicated by the operator. Thus, a simple and detailed indication system for an exerted preload on a bolt system is achieved.

In exemplary embodiments of the present invention, the lengths of the sleeves may be approximately two or three times of a diameter of the bolt. The diameter of the bolt may have the conventional dimensions such as M1 to M60 (according to the ISO metric screw thread). In particular, the above-described bolt system may be applied in large mechanical systems, such as wind turbines, wherein the bolts may have a dimension of the diameter of M30 to M50. Hence, the sleeves may have a length of approximately 60 mm to 100 mm (Millimetre). Depending on the desired and predefined maximum value or intermediate value of the preload, an appropriate material for the sleeves with an appropriate elasticity modulus may be chosen. For example, a sleeve may be made of steel with an elasticity modulus of approximately 210.000 MPa (Megapascal).

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a bolt system according to an exemplary embodiment of the present invention; and
Fig. 2 shows a bolt system with a spring washer according to an exemplary embodiment of the present invention.

### Detailed Description

The illustrations in the drawings are schematic. It is noted that in different figures, similar or identical elements are provided with the same reference signs.

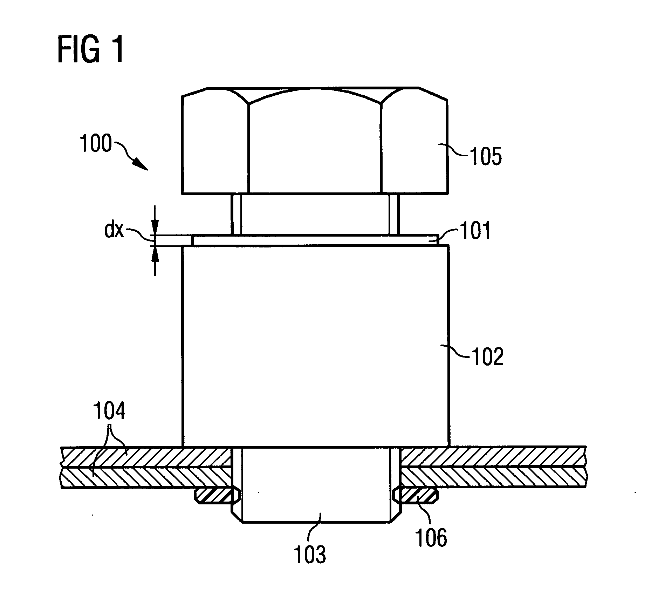

**Fig. 1** illustrates a bolt system 100 for indicating a level of preload on a bolt 103 that is connectable to a subject 104 to be fixed. The bolt system 100 comprises the bolt 103 with the bolt head 105. The first sleeve 101 is attached to the bolt 103 between the bolt head 105 and the subject 104. A second sleeve 102 is attached to the bolt 103 between the bolt head 105 and the subject 104. The first sleeve 101 is an inner sleeve and the second sleeve 102 is an outer sleeve that fits around the first sleeve 101. One of the sleeves 101; 102 may be longer than the other one of the sleeves 102; 101. When the preload is below a maximum value, the longer sleeve 101; 102 transmits a preload between the bolt head 105 and the subject 104. When the preload is above the maximum value, the longer sleeve 101; 102 is compressed in such a way that both sleeves 101, 102 transmit the preload between the bolt head 105 and the subject 104.

The bolt head 105 may be an integral part of the bolt 103. Moreover, the bolt head 105 may be a separate part of the bolt 103, such as a washer or a nut that is put on the bolt 103.

When the preload is above the maximum value and the longer sleeve 101; 102 is compressed such that both sleeves 101, 102 transmit the preload between the bolt head 105 and the subject 104, the preload transmission of the shorter sleeve 102; 101 indicates that the preload exceeds the maximum value.

The embodiment shown in Fig. 1 comprises the inner first sleeve 101 that is longer than the outer second sleeve 102. The longer first sleeve 101 transfers the preload when the preload value is below the predefined maximum value. When the maximum value of the preload is exceeded, the first sleeve 101 is compressed in such a way that the length of the sleeve 101 along the bolt 103 is compressed by the distance dx. Then, both sleeves 101 and 102 transmit the preload from the bolt head 105 to the subject 104.

The operator recognizes the transmission of the maximum value for the preload because the second sleeve 102 is clamped between the bolt head 105 and the subject 104 for transmitting parts of preload the second sleeve 102 and thus the second sleeve 102 is not longer movable with respect to the first sleeve 101. If the second sleeve 102 is movable with respect to the first sleeve 101, the operator recognizes that a preload is transmitted between the bolt head 105 and the subject 104, wherein the transmitted preload is below the maximum value of the preload. If the first sleeve 101 and the second sleeve 102 are movable with respect to the bolt 103, the operator recognizes that no preload is transmitted so that the operator has to tighten the bolt 103 with respect to the subject 104 for providing an accurate preload.

The subject 104 may comprise one plate-like element to which the bolt 103 may be attached with a predefined preload. Moreover, the subject 104 may comprise two or more elements that should be fixed together by the bolt system 100. One of the subjects 104 may comprise a thread to which the bolt 103 with a corresponding thread may be screwed in. As shown in Fig. 1, the subjects 104 may comprise a through-hole, wherein on the opposite side of the bolt 103 with respect to the bolt head 105 a nut may be screwed in order to clamp the subjects 104 between the nut 106, the sleeves 101, 102 and the bolt head 105. The sleeves 101, 102 for indicating the transmitted preload may be interposed between the bolt head 105 and the subject 104 as shown in Fig. 1, but may alternatively be interposed between the nut 106 and the subject 104 or between the two subjects 104 itself.

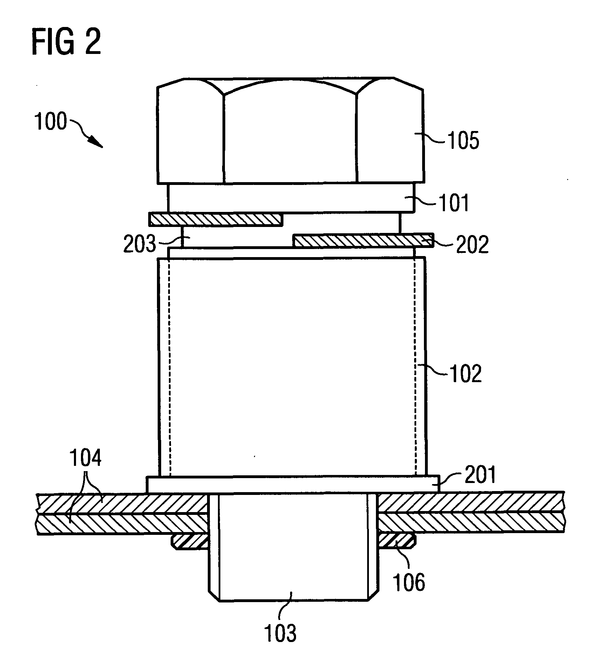

**Fig. 2** illustrates a bolt system 100, wherein a spring washer 202 is attached between the first sleeve 101 and the second sleeve 102. For a better fixation on the first sleeve 101, the spring washer 202 may be located in a groove 203 of the first sleeve 101. The spring washer 202 may be attached to the first sleeve 101 in such a way, that the spring washer 202 is placed inside the groove 203, so that the spring washer 202 is adapted for transferring the spring force to the sidewalls of the first sleeve 101 inside the groove 203 (as shown in Fig. 2). Alternatively, the spring washer 202 may be attached between the first sleeve 101 and the second sleeve 102, wherein the spring load is transferred to the first sleeve 101 and to the second sleeve 102.

When the bolt 103 is tightened with respect to the subject 104, the first sleeve 101 will be compressed, wherein the amount of compression is a function of the applied preload and the elasticity modulus of the first sleeve 101. For modifying the compression length of the first sleeve, the spring washer 202 may be attached. As long as the spring washer 202 is not compressed maximally, the preload is not fully transmitted to the second sleeve 102 and the second sleeve 102 may still be rotated with respect to the first sleeve 101 by the operator. If the spring washer 202 is compressed maximally by the preload and the first sleeve 101 is compressed as well, a more preload is transmitted to the second sleeve 102, so that the second sleeve 102 is immovable. Spring washer 202 is detachably fixed to the bolt 103. Moreover, the elasticity and the spring force of the spring washer 202 may be predefined. Thus, if it is desired to set up a different maximum value for the preload, simply the spring washer with different spring forces and elasticity characteristic may be put on the bolt 103. Hence, with an easy mechanism, the bolt system 100 may be adapted to desired values for a maximum value of the preload. The bolt system 100 may thus be flexibly adapted to different places of installation.

Moreover, Fig. 2 shows the first sleeve 101 comprising a flange 201. The flange 201 may extend radially outwards (as shown in Fig. 2) or radially inwards. The second sleeve 102 may be fit to the first sleeve 101, wherein the second sleeve 102 abuts with one end on the flange 201.

Thus, there is no direct contact between the second sleeve 102 and the subject 104. Moreover, the flange 201 may create a larger contact area between the first sleeve 101 and the second sleeve 102 with respect to the subject 104, so that a softer force transmission of the preload is achieved.

In the following, when tightening the bolt 103 to the subject 104, the tension of the bolt 103 will provide the below described multiple states:
In the beginning, the bolt 103 is not tightened enough to transmit preload to the inner first sleeve 101. In this phase, both the inner first sleeve 101 and the outer second sleeve 102 are freely movable or rotatable with respect to the bolt 103.

Next, the bolt 103 is tightened in order to transmit preload to the inner first sleeve 101. By a predefined selection of the material for the inner first sleeve 101, the first sleeve 101 will be compressed in its longitudinal direction with respect to the bolt 103 proportional to the applied preload exerting on the bolt 103. Hereby, the spring washer 202 may be pressed against the two sidewalls of the groove 203 or between the first sleeve 101 and the second sleeve 102. In this phase, the second sleeve 102 may still be rotated with respect to the bolt 103 by the operator. The second sleeve 102 may be rotated freely or with a resistance caused by the spring load of the spring washer 202. As long as the spring washer 202 is not compressed maximally, the second sleeve 102 is rotatable with respect to the bolt 103.

Finally, when the bolt 103 is tightened so much that the preload transmitted by the first sleeve 101 results in a longitudinal compression of the first sleeve 101 which makes the spring washer 202 to be compressed maximally, the further tightening of the bolt and the further preload is transferred via the spring washer 202 to the second sleeve 102. Thus, both, the first sleeve 101 and the second sleeve 102 transmit the preload from the bolt head 105 to the subject 104.

Additionally further intermediate sleeves may be interposed between the first sleeve 101 and the second sleeve 102 in order to indicate an intermediate value of preload as well.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Bolt system (100) for indicating a level of preload of a bolt (103) that is connectable to a subject (104) to be fixed, the bolt system (100) comprising:
the bolt (103) with a bolt head (105),
a first sleeve (101) attached to the bolt (103) between the bolt head (105) and the subject (104),
a second sleeve (102) attached to the bolt (103) between the bolt head (105) and the subject (104),
wherein the first sleeve (101) is an inner sleeve and the second sleeve (102) is an outer sleeve that fits around the first sleeve (101),
wherein the first sleeve (101) is longer than the second sleeve (102),
wherein, when the preload is below a maximum value, the first sleeve (101) transmits the preload between the bolt head (105) and the subject (104), and
wherein, when the preload is above the maximum value, the first sleeve (101) is compressed in such a way that both sleeves (101, 102) transmit the preload between the bolt head (105) and the subject (104), and
a spring washer (202),
wherein the spring washer (202) is attached to the first sleeve (101),
wherein the spring washer (202) is adapted for transferring a predetermined value of the preload to the second sleeve (102).

2. Bolt system (100) of claim 1,
wherein the first sleeve (101) comprises elastic characteristics that are defined in such a way that the length of the first sleeve (101) when transmitting the maximum value of the preload is definable.

3. Bolt system (100) of claim 1 or 2,
wherein the second sleeve (102) is slideably attached to the first sleeve (101),
wherein the second sleeve (102) is slideably with respect to the first sleeve (101), if the first sleeve (101) transmits the preload with a value below the maximum value, and
wherein the second sleeve (102) is immovable with respect to the first sleeve (101), if the first sleeve (101) and the second sleeve (102) transmit the preload with a value above the maximum value.

4. Bolt system (100) of claim one of the claims 1 to 3,
wherein the first sleeve (101) and the second sleeve (102) are abuttable on the subject (104).

5. Bolt system (100) of one of claims 1 to 4,
wherein the first sleeve (101) comprises a flange (201), wherein the flange (201) is abuttable on the subject (104),
wherein second sleeve (102) is abuttable to the flange (201) and the bolt head (105).

6. Bolt system (100) of one of claims 1 to 5,
wherein the first sleeve (101) comprises a groove (203) to which the spring washer (202) is attached.

7. Bolt system (100) of one of claims 1 to 6, further comprising
an intermediate sleeve,
wherein the intermediate sleeve fits around the first sleeve (101) and the second sleeve (102) fits around the intermediate sleeve,
wherein, when the preload is below an intermediate value, the first sleeve (101) transmits the preload between the bolt head (105) and the subject (104), and
wherein, when the preload is above the intermediate value, the first sleeve is compressed in such a way that the first sleeve (101) and the intermediate sleeve transmit the preload between the bolt head (105) and the subject (104), so that a preload transmission by the intermediate sleeve indicates that the preload exceeds the intermediate value.

8. Bolt system (100) of claim 7, further comprising a plurality of intermediate sleeves.

9. Method of indicating a level of preload of a bolt (103) that is connectable to a subject (104) to be fixed, the method comprising
attaching a first sleeve (101) and a second sleeve (102) to the bolt (103) between a bolt head (105) and the subject (104), wherein the first sleeve (101) is an inner sleeve and the second sleeve (102) is an outer sleeve that fits around the first sleeve (101) and wherein the first sleeve (101) is longer than the second sleeve (102),
transmitting the preload between the bolt head (105) and the subject (104) by the first sleeve (101) when the preload is below a maximum value,
compressing the first sleeve (101) when the preload is above the maximum value in such a way that both sleeves (101, 102) transmit the preload between the bolt head (105) and the subject (104), and
transferring a predetermined value of the preload to the second sleeve (102) by a spring washer (202),
wherein the spring washer (202) is attached to the first sleeve (101).

## Patentansprüche

1. Schraubsystem (100) zum Angeben des Vorspannungsgrades einer Schraube (103), die mit einem zu fixierenden Gegenstand (104) verbunden werden kann, wobei das Schraubsystem (100) Folgendes umfasst:
die Schraube (103) mit einem Schraubenkopf (105),
eine erste Abstandshülse (101), die zwischen dem Schraubenkopf (105) und dem Gegenstand (104) an der Schraube (103) befestigt ist,
eine zweite Abstandshülse (102), die zwischen dem Schraubenkopf (105) und dem Gegenstand (104) an der Schraube (103) befestigt ist,
wobei es sich bei der ersten Abstandshülse (101) um eine innere Abstandshülse handelt und bei der zweiten Abstandshülse (102) um eine äußere Abstandshülse, die um die erste Abstandshülse (101) herum passt,
wobei die erste Abstandshülse (101) länger ist als die zweite Abstandshülse (102),
wobei die erste Abstandshülse (101) die Vorspannung, wenn diese unter einem Maximalwert liegt, zwischen Schraubenkopf (105) und Gegenstand (104) überträgt, und
wobei die erste Abstandshülse (101), wenn die Vorspannung über dem Maximalwert liegt, so komprimiert wird, dass beide Abstandshülsen (101, 102) die Vorspannung zwischen Schraubenkopf (105) und Gegenstand (104) übertragen, und eine Federscheibe (202),
wobei die Federscheibe (202) an der ersten Abstandshülse (101) befestigt ist,
wobei die Federscheibe (202) für das Übertragen eines vorgegebenen Vorspannungswertes auf die zweite Abstandshülse (102) ausgelegt ist.

2. Schraubsystem (100) nach Anspruch 1,
bei dem die erste Abstandshülse (101) federnde Eigenschaften aufweist, die so definiert sind, dass die Länge der ersten Abstandshülse (101) beim Übertragen des maximalen Vorspannungswertes definierbar ist.

3. Schraubsystem (100) nach Anspruch 1 oder 2,
bei dem die zweite Abstandshülse (102) verschiebbar an der ersten Abstandshülse (101) befestigt ist,
wobei die zweite Abstandshülse (102) in Bezug zur ersten Abstandshülse (101) verschiebbar ist, wenn die erste Abstandshülse (101) die Vorspannung mit einem unter dem Maximalwert liegenden Wert überträgt, und
wobei die zweite Abstandshülse (102) in Bezug zur ersten Abstandshülse (101) unbeweglich ist, wenn die erste Abstandshülse (101) und die zweite Abstandshülse (102) die Vorspannung mit einem über dem Maximalwert liegenden Wert übertragen.

4. Schraubsystem (100) nach einem der Ansprüche 1 bis 3, bei dem die erste Abstandshülse (101) und die zweite Abstandshülse (102) an dem Gegenstand (104) anliegen können.

5. Schraubsystem (100) nach einem der Ansprüche 1 bis 4,
bei dem die erste Abstandshülse (101) einen Flansch (201) umfasst,
wobei der Flansch (201) an dem Gegenstand (104) anliegen kann,
wobei die zweite Abstandshülse (102) an dem Flansch (201) und dem Schraubenkopf (105) anliegen kann.

6. Schraubsystem (100) nach einem der Ansprüche 1 bis 5,
bei dem die erste Abstandshülse (101) eine Nut (203) umfasst, an der die Federscheibe (202) befestigt ist.

7. Schraubsystem (100) nach einem der Ansprüche 1 bis 6, das ferner Folgendes umfasst:
eine Zwischenabstandshülse,
wobei die Zwischenabstandshülse um die erste Abstandshülse (101) und die zweite Abstandshülse (102) um die Zwischenabstandshülse herum passt,
wobei die erste Abstandshülse (101) die Vorspannung, wenn diese unter einem Zwischenwert liegt, zwischen Schraubenkopf (105) und Gegenstand (104) überträgt, und wobei die erste Abstandshülse, wenn die Vorspannung über dem Zwischenwert liegt, so komprimiert wird, dass die erste Abstandshülse (101) und die Zwischenabstandshülse die Vorspannung zwischen Schraubenkopf (105) und Gegenstand (104) übertragen, so dass eine Vorspannungsübertragung durch die Zwischenabstandshülse anzeigt, dass die Vorspannung den Zwischenwert übersteigt.

8. Schraubsystem (100) nach Anspruch 7, das ferner mehrere Zwischenabstandshülsen umfasst.

9. Verfahren zum Angeben des Vorspannungsgrades einer Schraube (103), die mit einem zu fixierenden Gegenstand (104) verbunden werden kann, wobei das Verfahren Folgendes umfasst:
Befestigen einer ersten Abstandshülse (101) und einer zweiten Abstandshülse (102) zwischen einem Schraubenkopf (105) und dem Gegenstand (104) an der Schraube (103), wobei es sich bei der ersten Abstandshülse (101) um eine innere Abstandshülse handelt und bei der zweiten Abstandshülse (102) um eine äußere Abstandshülse, die um die erste Abstandshülse (101) herum passt, und wobei die erste Abstandshülse (101) länger ist als die zweite Abstandshülse (102),
Übertragen der Vorspannung, wenn diese unter einem Maximalwert liegt, zwischen Schraubenkopf (105) und Gegenstand (104) durch die erste Abstandshülse (101),
Komprimieren der ersten Abstandshülse (101), wenn die Vorspannung über dem Maximalwert liegt, so dass beide Abstandshülsen (101, 102) die Vorspannung zwischen Schraubenkopf (105) und Gegenstand (104) übertragen, und
Übertragen eines vorgegebenen Vorspannungswertes durch eine Federscheibe (202) auf die zweite Abstandshülse (102),
wobei die Federscheibe (202) an der ersten Abstandshülse (101) befestigt ist.

## Revendications

1. Système de boulon (100) pour indiquer un niveau de précharge d'un boulon (103) qui peut être connecté à un sujet (104) devant être fixé, le système de boulon (100) comprenant :
le boulon (103) avec une tête (105) de boulon,
un premier fourreau (101) fixé au boulon (103) entre la tête (105) de boulon et le sujet (104),
un deuxième fourreau (102) fixé au boulon (103) entre la tête (105) de boulon et le sujet (104),
dans lequel le premier fourreau (101) est un fourreau intérieur et le deuxième fourreau (102) est un fourreau extérieur qui s'ajuste autour du premier fourreau (101),
dans lequel le premier fourreau (101) est plus long que le deuxième fourreau (102),
dans lequel, lorsque la précharge est en-dessous d'une valeur maximum, le premier fourreau (101) transmet la précharge entre la tête (105) de boulon et le sujet (104), et
dans lequel, lorsque la précharge est au-dessus de la valeur maximum, le premier fourreau (101) est compressé de telle manière que les deux fourreaux (101, 102) transmettent la précharge entre la tête (105) de boulon et le sujet (104), et
une rondelle frein (202),
dans lequel la rondelle frein (202) est fixée au premier fourreau (101),
dans lequel la rondelle frein (202) est adaptée à transférer une valeur prédéterminée de la précharge au deuxième fourreau (102).

2. Système de boulon (100) selon la revendication 1,
dans lequel le premier fourreau (101) comprend des caractéristiques élastiques qui sont définies de telle manière que la longueur du premier fourreau (101) lors de la transmission de la valeur maximum de la précharge est définissable.

3. Système de boulon (100) selon la revendication 1 ou 2,
dans lequel le deuxième fourreau (102) est fixé de façon coulissante au premier fourreau (101),
dans lequel le deuxième fourreau (102) est coulissant par rapport au premier fourreau (101), si le premier fourreau (101) transmet la précharge avec une valeur en-dessous de la valeur maximum, et
dans lequel le deuxième fourreau (102) est immobile par rapport au premier fourreau (101), si le premier fourreau (101) et le deuxième fourreau (102) transmettent la précharge avec une valeur au-dessus de la valeur maximum.

4. Système de boulon (100) selon l'une des revendications 1 à 3,
dans lequel le premier fourreau (101) et le deuxième fourreau (102) peuvent venir buter sur le sujet (104).

5. Système de boulon (100) selon l'une des revendications 1 à 4,
dans lequel le premier fourreau (101) comprend une collerette (201), dans lequel la collerette (201) peut venir buter sur le sujet (104),
dans lequel le deuxième fourreau (102) peut venir buter sur la collerette (201) et la tête (105) de boulon.

6. Système de boulon (100) selon l'une des revendications 1 à 5,
dans lequel le premier fourreau (101) comprend une rainure (203) à laquelle la rondelle frein (202) est fixée.

7. Système de boulon (100) selon l'une des revendications 1 à 6, comprenant en outre
un fourreau intermédiaire,
dans lequel le fourreau intermédiaire s'ajuste autour du premier fourreau (101) et le deuxième fourreau (102) s'ajuste autour du fourreau intermédiaire,
dans lequel, lorsque la précharge est en-dessous d'une valeur intermédiaire, le premier fourreau (101) transmet la précharge entre la tête (105) de boulon et le sujet (104), et
dans lequel, lorsque la précharge est au-dessus de la valeur intermédiaire, le premier fourreau est compressé de telle manière que le premier fourreau (101) et le fourreau intermédiaire transmettent la précharge entre la tête (105) de boulon et le sujet (104), de sorte qu'une transmission de précharge par le fourreau intermédiaire indique que la précharge excède la valeur intermédiaire.

8. Système de boulon (100) selon la revendication 7, comprenant en outre
une pluralité de fourreaux intermédiaires.

9. Procédé d'indication d'un niveau de précharge d'un boulon (103) qui peut être connecté à un sujet (104) devant être fixé, le procédé comprenant
la fixation d'un premier fourreau (101) et d'un deuxième fourreau (102) au boulon (103) entre une tête (105) de boulon et le sujet (104), dans lequel le premier fourreau (101) est un fourreau intérieur et le deuxième fourreau (102) est un fourreau extérieur qui s'ajuste autour du premier fourreau (101) et dans lequel le premier fourreau (101) est plus long que le deuxième fourreau (102),
la transmission de la précharge entre la tête (105) de boulon et le sujet (104) par le premier fourreau (101) lorsque la précharge est en-dessous d'une valeur maximum,
la compression du premier fourreau (101) lorsque la précharge est au-dessus de la valeur maximum de telle manière que les deux fourreaux (101, 102) transmettent la précharge entre la tête (105) de boulon et le sujet (104), et
le transfert d'une valeur prédéterminée de la précharge au deuxième fourreau (102) par une rondelle frein (202),
dans lequel la rondelle frein (202) est fixée au premier fourreau (101).
